# EUROPÄISCHE PATENTSCHRIFT

(11) **EP 1 874 455 B1**
(45) Veröffentlichungstag und Bekanntmachung des Hinweises auf die Patenterteilung: **08.10.2008**
(21) Anmeldenummer: 06742309.5
(22) Anmeldetag: 26.04.2006
(51) Int. Cl.: B01J 8/18, B01J 4/00

(54) **STEUERBARE GASANSTRÖMEINRICHTUNG FÜR STRAHLSCHICHTAPPARATE**
CONTROLLED GAS INLET DEVICE FOR JET LAYER UNITS
DISPOSITIF DE SOUFFLAGE DE GAZ POUVANT ETRE COMMANDE POUR DES APPAREILS D'APPLICATION DE COUCHE FLUIDISEE

(30) Priorität: 26.04.2005 DE 102005020682
(43) Veröffentlichungstag der Anmeldung: 09.01.2008
(73) Patentinhaber: AVA Anhaltinische Verfahrens- und Anlagentechnik GmbH, 39124 Magdeburg (DE)
(72) Erfinder: HENNEBERG, Markus, 39114 Magdeburg (DE); IHLOW, Matthias, 39291 Möser (DE)
(74) Vertreter: Fischer, Volker
(86) Internationale Anmeldenummer: PCT/DE2006/000771
(87) Internationale Veröffentlichungsnummer: WO 2006/114092

(56) Entgegenhaltungen:
- DE-A1- 10 162 781
- DE-C1- 10 004 939
- US-A- 3 894 481
- US-A- 4 095 534
- US-A- 5 333 838
- US-B1- 6 234 208

## Beschreibung

Die Erfindung betrifft eine steuerbare Gasanströmeinrichtung für Strahlschichtapparate. Sie ist insbesondere anwendbar bei rechteckigen langgestreckten Apparaten, deren Anströmbereich rinnenförmig ausgebildet ist und die eine seitlich nach außen geneigte Strahleinströmungswand und dieser gegenüberliegend eine ggf. auch seitlich nach außen geneigte Strahlrückströmungswand aufweisen. Die Erfindung kann sowohl bei einseitigen als auch bei doppelseitigen Strahlschichtapparaten angewendet werden.

Aus der DE 100 04 939 C1 ist eine gattungsgemäße Gaseinströmeinrichtung für Strahlschichtapparate zur Fluidisierung weitgehend beliebig geformter und in ihren Partikelabmessungen sowie Partikelmassen unterschiedlicher Gütervorbekannt. Die steuerbare Gasanströmeinrichtung besteht aus einem mit Durchbrüchen für das Hindurchtreten von Fluidisierungsgas versehenen Kreiszylinder, der im unteren Bereich der Fluidisierungskammer des Strahlschichtapparates zwischen der gegenüber der senkrechten nach außen geneigten Strahleinströmungswand und der der Strahleinströmungswand gegenüberliegenden Strahlrückströmungswand horizontal und um seine Längsachse drehbar angeordnet ist. Durch Drehung des Zylinders kann der effektive Querschnitt der Durchbrüche für das in die Fluidisierungskammer einströmende Fluidisierungsgas verändert und dadurch die in die Fluidisierungskammer einströmende Fluidisierungsgasmenge gesteuert werden. Die aus der DE 100 04 939 C1 bekannte steuerbare Gasanströmeinrichtung mit einem im unteren Bereich der Fludisierungskammer zwischen der Strahleinströmungswand und der Strahlrückströmungswand angeordenten, Durchbrüche aufweisenden und um seine Längsachse drehbaren Kreiszylinder wird zur Steuereung des in eine Strahlschichtapparatur eintretenden Fluidisierungsgases auch bei dem in der DE 101 62 781 A1 beschriebenen Strahlschichtapparat mit wenigstens zwei Prozessbereichen sowie dem in der DE 103 22 062 A1 beschriebenen Strahlschichtapparat zum Aufbringen von Flüssigkeiten in eine Feststoffströmung verwendet.

Nachteilig bei der beschriebenen steuerbaren Gasanströmeinrichtung ist, dass aufgrund der scharfkantigen geometrischen Form der vom Fluidisierungsgas durchströmten Durchbrüche des Zylinders mit Druckverlusten verbundene Umlenkungen und Verwirbelungen des Fluidisierungsgases auftreten und dass es infolgedessen zu Ablagerungen von beim Prozess entstehendem Staub im Bereich der steuerbaren Gasanströmeinrichtung kommt, wodurch die Drehung des Zylinders behindert und die Funktion der steuerbaren Gasanströmeinrichtung beeinträchtigt wird.

Der Erfindung liegt daher die Aufgabe zugrunde, die beschriebene Gasanströmeinrichtung für Strahlschichtapparate so zu verbessern, dass die Nachteile dieser Lösung vermieden werden.

Diese Aufgabe wird erfindungsgemäß durch eine die Merkmale des l. Patentanspruches aufweisende steuerbare Gasanströmeinrichtung gelöst. Vorteilhafte Weiterbildungen der erfindungsgemäßen steuerbaren Gasanströmeinrichtung sind in den Unteransprüchen beschrieben. Die steuerbare Gasanströmeinrichtung weist einen um eine Längsachse drehbaren Zylinder mit nockenförmiger Grundfläche auf, der im unteren Bereich der Fluidisationskammer eines Strahlschichtapparates zwischen der Strahleinströmungswand und der Strahlrückströmungswand angeordnet ist Die Umfangskontur der nockenförmigen Grundfläche des Zylinders weist einen kreisbogenförmigen Bereich, durch dessen Kreismittelpunkt die Längsachse verläuft, um die der Zylinder drehbar angeordnet ist, und einen sich über den Kreisbogen erhebenden Bereich auf Der Zylinder ist so angeordnet, dass der kreisbogenförmige Bereich der Umfangskontur der Grundfläche des Zylinders, im Folgenden kurz kreisbogenförmiger Bereich des Zylinders genannt, zur Strahlrückströmungswand weist und an dieser spaltfrei anliegt, während der sich über den Kreisbogen erhebende Bereich der Grundfläche des Zylinders, im Folgenden kurz erhabener Bereich des Zylinders genannt, in Richtung des unteren Bereiches der Strahleinströmungswand weist und durch Drehung des Zylinders um die Längsachse zwischen dem erhabenen Bereich des Zylinders und dem unteren Bereich der Strahleinströmungswand ein in seiner Breite veränderbarer Spalt gebildet wird. Dabei sollte der erhabene Bereich des Zylinders mindestens in einer Drehstellung spaltfrei am unteren Breich der Strahleinströmungswand anliegen. In dieser Drehstellung des Zylinders ist die Fluidisierungsgaszufuhr zur Fluidisierungskammer gesperrt. Durch Verdrehung des Zylinders um die Längsachse, wobei zweckmäßigerweise die Drehrichtung so gewählt wird, dass sich der erhabene Bereich des Zylinders in Richtung der Fluidisierungskammer bewegt, wird zwischen dem erhabenen Bereich des Zylinders und dem unteren Bereich der Strahleinströmungswand ein Spalt für den Eintritt des Fluidisierungsgases in die Fluidisierungskammer gebildet. Die Breite des Spaltes und damit die in die Fluidisierungskammer einströmende Fluidisierungsgasmenge ist abhängig vom Drehwinkel. Der kreisbogenförmige Bereich des Zylinders liegt dabei spaltfrei an der Strahlrückströmungswand an. Die erfindungsgemäße Gestaltung der Gasantrömeinrichtung weist im Bereich des Fluidisierungsgasdurchtrittes keine scharfkantige geometrische Form auf, so dass mit Druckverlusten verbundene abrupte Strömungsumlenkungen und Verwirbelungen des Fluidisierungsgases, infolge derer es zu Staubablagerungen im Bereich der Gasanströmeinrichtung kommt, vermieden werden. Die weitgehend gerundete Kontur der steuerbaren Gasanströmeinrichtung erlaubt auch bei hohen Strömungsgeschwindigkeiten des Fluidisierungsgases schnelle Belastungswechsel, ohne dass dadurch Schwingungen der Apparatur hervorgerufen werden.

Eine bevorzugte Weiterbildung der erfindungsgemäßen steuerbaren Gasanströmeinrichtung besteht darin, die Umfangskontur der nockenförmigen Grundfläche des Zylinders zwischen dem kreisbogenförmigen Bereich und dem sich über den Kreisbogen erhebenden Bereich mindestens an einer Seite abzuflachen. Dadurch wird erreicht, dass bei Drehung des Zylinders um die Längsachse dieser mindestens eine Drehstellung einnehmen kann, in der sowohl zwischen dem unteren Bereich der Strahleinströmungswand und dem Zylinder als auch zwischen der Strahtrückströmungswand und dem

Zylinder ein Spalt existiert. Der Zylinder kann in dieser Drehstellung allseitig von Gas umströmt und so bei Bedarfgereinigtwerden.

Die erfindungsgemäße steuerbare Gasanströmeinrichtung gewähleistet so einen langen störungsfreien Betrieb, ohne dass aufwendige Servicearbeiten zur Reinigung der Gasanströmeinrichtung notwendig werden. Gegebenenfalls auftretende Anhaftungen von Partikelstaub am Zylinder können schnell und unproblematisch entfernt werden.

Es ist zweckmäßig, unterhalb der Strahleinströmungswand eine Rinne anzuordnen. Der erhabene Bereich des Zylinders bildet dann in Wirkverbindung mit dieser Rinne durch Drehung des Zylinders den Spalt für den Durchtritt des Fluidisierungsgases in die Fluidisierungskammer Eine Möglichkeit zur Ausbildung der Rinne besteht darin, den unteren Bereich der Gaseinströmungswand in diese Rinne auslaufen zu lassen.

Zur gezielten Beeinflussung der Ausbildung der Strahlschicht, um beispielsweise eine stabile walzenförmige Strahlschicht über die gesamte Länge der Fluidisierungskammer des Strahlschichtapparates zu erzeugen, kann es zweckmäßig sein, die Fluidisierungsgaszufuhr in die Fluidisierungskammer über die Länge der Fluidisierungsgkammer unterschiedlich zu gestalten. Dies kann beispielsweise durch einen über die Länge der Fluidisierungskammer unterschiedlich breiten Spalt für den Eintritt des Fluidisierungsgases in die Fluidisierungskammer zwischen der Strahleinströmungswand und dem erhabenen Bereich des Zylinders erreicht werden. Eine Möglichkeit, dies zu realisieren, besteht darin, die unterhalb der Strahleinströmungswand angeordnete Rinne in Richtung der Fluidisierungskammer mit einerAuslaufkante zu versehen und diese Auslaufkante in Bezug zur Längsachse des Zylinders bogenförmig zu gestalten. Dadurch entsteht bei Drehung des Zylinders in Richtung der Fluidisierungskammer zwischen dem erhabenen Bereich des Zylinders und der bogenförmig gestalteten Auslaufkante der Rinne ein in Bezug auf die Längsachse des Strahlschichtapparates unterschiedlich breiter Spalt für den Durchtritt des Fluidisierungsmediums.

Es kann weiterhin für bestimmte Anwendungsfälle zweckmäßig sein, die Höhe des sich über den Kreisbogen erhebenden Bereiches der Grundfläche des Zylinders in Richtung der Längsachse des Zylinders beispielsweise Abschnittsweise unterschiedlich zu bemessen. Auch dadurch kann in Wirkverbindung mit einer dieser Gestaltung des Zylinders angepaßten Rinne ein über die Länge des Strahlschichtapparates unterschiedlich breiter Spalt für den Durchtritt des Fluidisierungsmediums bei Drehung des Zylinders erzeugt werden. In diesem Zusammenhang kann es auch von Verteil sein, wenn die Länge des Zylinders größer als die Länge der Fluidisierungskammer ist und der Zylinder in Längsrichtung verschiebbar in dem Strahlschichtapparat angeordnet ist

Die Erfindung soll nachfolgend anhand eines Ausführungsbeispieles näher erläutert werden.

Die zugehörigen Zeichnungen zeigen in
- Figur 1: den Querschnitt eines schematischen Strahlschichtapparates mit einer erfindungsgemäßen Gasanströmeinrichtung, in
- Figur 2: den Querschnitt einer erfindungsgemäßen Gasanströmeinrichtung im Strahlschichtbetrieb, in
- Figur 3: den Querschnitt einer erfindungsgemäßen Gasanströmeinrichtung mit einer abgeflachten Zylinderseite im Strahlschichtbetrieb, in
- Figur 4: den Querschnitt einer erfindungsgemäßen Gasanströmeinrichtung mit einer abgeflachten Zylinderseite in Schließstellung, in
- Figur 5: den Querschnitt einer erfindungsgemäßen Gasanströmeinrichtung mit einer abgeflachten Zylinderseite in einer Drehstellung zur Reinigung der Gasanströmeinrichtung und in
- Figur 6: den Querschnitt eines schematischen doppelseitigen Strahlschichtapparates mit erfindunsggemäßer Gasanströmeinrichtung

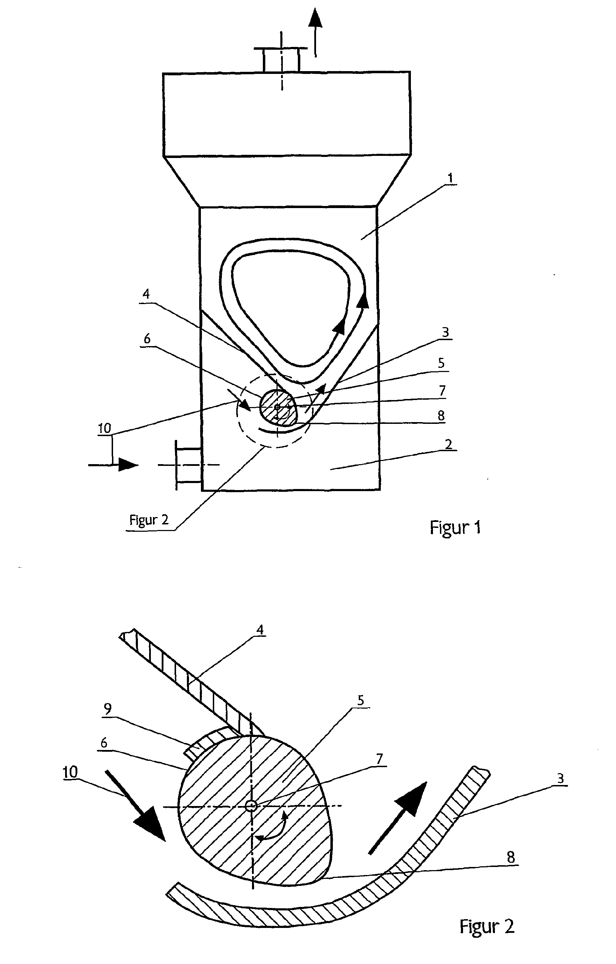

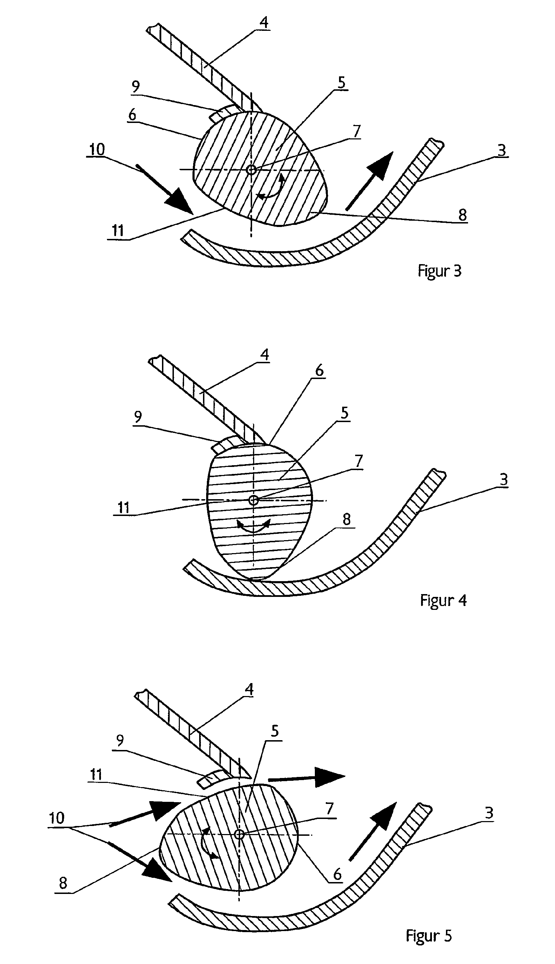

Der in Figur 1 gezeigte Strahlschichtapparatweist eine Fluidisierungskammer 1 und eine darunter liegende Gasverteilkammer 2 auf Die Fluidisierungskammer 1 ist gegenüber der Gasverteilkammer 2 durch eine Strahleinströmungswand 3, eine Strahlrückströmungswand 4 und die erfindungsgemäße Gasanströmeinrichtung abgegrenzt. Strahleinströmungswand 3 und Strahlrückströmungswand 4 sind gegenüber der Senkrechten geneigt. Die Strahleinströmungswand 3 läuft nach unten hin rinnenförmig aus. Die steuerbare Gasanströmeinrichtung hat die Form eines Zylinders 5 mit nockenförmiger Grundfläche. Die Umfangskontur der nockenförmigen Grundfläche des Zylinders 5 weist einen kreisbogenförmigen Bereich 6, durch dessen Kreismittelpunkt die Längsachse 7 verläuft, um die der Zylinder drehbar angeordnet ist, und einen sich über den Kreisbogen erhebenden Bereich 8, im Folgenden kurz erhabener Bereich 8 genannt, auf Der Zylinder 5 ist so angeordnet, dass der kreisbogenförmige Bereich 6 der Umfangskontur der Grundfläche des Zylinders 5 zur Strahlrückströmungswand 4 weist und an dieser spaltfrei anliegt, während der erhabene Bereich 8 der Grundfläche des Zylinders 5 in Richtung des unteren Bereiches der Strahleinströmungswand 3 weist. Durch Drehung des Zylinders 5 um die Längsachse 7 entsteht in Abhängigkeit des Drehwinkels zwischen dem erhabenen Bereich 8 des Zylinders 5 und der rinnenförmig auslaufenden Strahleinströmungswand 3 ein in seiner Breite veränderbarer Spalt. Mindestens in einer Drehwinkelstellung des Zylinders 5 liegt die nockenförmige Seite 8 des Zylinders 5 linienförmig dicht an der Strahleinströmungswand 3 an, wie die Figur 4 zeigt. An der Strahlrückströmungswand 4 ist eine teilweise den kreisbogenförmigen Bereich 6 des Zylinders 5 umschließende Gasleiteinrichtung 9 angebracht.

Die Strahleinströmungswand 3, die Strahlrückströmungswand 4 und der Zylinder 5 sind so angeordnet, dass ein seitlicher Eintritt des Fluidisierungsgases 10 in die Fluidisierungskammer I erfolgt. Das Fluidisierungsgas 10 strömt aus der Gasverteilkammer 2 durch den Spalt zwischen dem erhabenen Bereich 8 des Zylinders 5 und der Strahleinströmungswand 3 in die Fluidisierungskammer I. Durch Drehung des Zylinders 5 um die Längsachse 7 kann die Breite des Spaltes zwischen dem erhabenen Bereich 8 des Zylinders 5 und der Strahleinströmungswand 3 für das Hindurchströmen des Fluidisierungsgases 10 verändert werden. Strömungsgeschwindigkeit und Menge des in die Fluidisierungskammer 1 einströmenden Fluidisierungsgases 10 können damit so gesteuert werden, dass eine stabile, walzenförmige Strahlschicht innerhalb der Fluidisierungskammer 1 entsteht. Die Beeinflussung des Fluidisierungsgasstromes 10 durch Drehung des Zylinders 5 ist dabei so effektiv, dass auch geringfügige Störungen der Strahlschicht ausgeregelt werden können.

Partikel des zu fluidisierenden Gutes, die infolge Druckschwankungen nach unten durchfallen, sammeln sich in der rinnenförmig nach unten auslaufenden Strahleinströmungswand 3 und werden durch das Fluidisierungsgas I0 in die Strahlschicht zurückgetragen. Die Gestaltung der erfindungsgemäßen Gasanströmeinrichtung verhindert durch das konsequente Vermeiden scharfkantiger Konturen im Strömungsweg des Fluidisierungsgases 10 weitgehend das Auftreten von Ablagerungen, die den Gaseintritt in die Fluidisierungskammer behindern bzw die Funktion der steuerbaren Gasanströmeinrichtung beeinträchtigen.

In den Figuren 3, 4 und 5 ist eine vorteilhafte Weiterbildung der erfindungsgemäßen steuerbaren Gasanströmeinrichtung gezeigt. Bei dieser Weiterbildung weist die Kontur der Grundfläche des Zylinders 5 zwischen dem kreisbogenförmigen Bereich 6 und dem erhabenen Bereich 8 einen abgeflachten Abschnitt II auf Durch Drehung des Zylinders 5 um die Längsachse 7 kann der Zylinder 5 in eine Stellung gebrachtwerden, in der sowohl zwischen dem unteren Bereich der Strahleinströmungswand 3 und dem Zylinder 5 als auch zwischen der Strahlrückströmungswand 4 und dem Zylinder 5 ein Spalt existiert. Der Zylinder 5 kann in dieser Drehstellung allseitig von Gas umströmt und so bei Bedarf gereinigt werden. In Figur 5 ist diese Drehwinkeistellung des Zylinders 5 gezeigt.

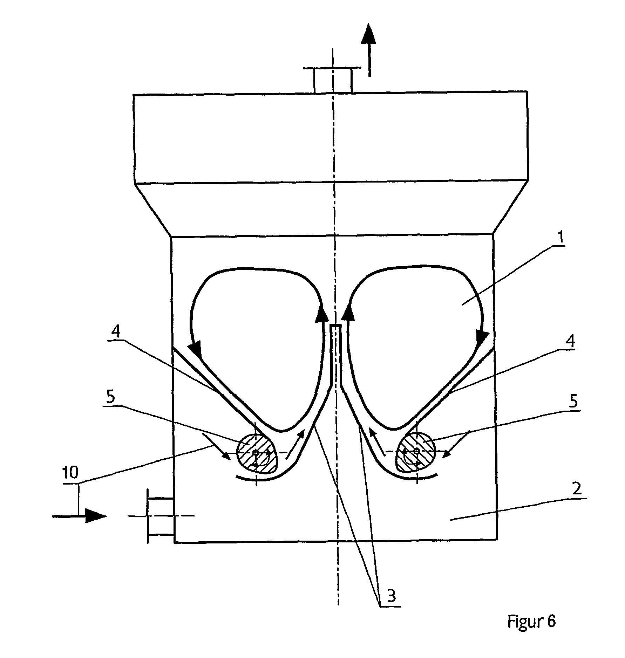

Die Figur 6 zeigt einen doppelseitig ausgeführten Strahlschichtapparat mit erfindungsgemäßer Gasanströmeinrichtung.

## Patentansprüche

1. Steuerbare Gasanströmeinrichtung für Strahlschichtapparate mit mindestens einer Strahleinströmungswand (3) und einer der Strahleinströmungswand (3) gegenüberliegenden Strahlrückströmungswand (4), bestehend aus mindestens einem im unteren Bereich der Fluidisierungskammer (1) des Strahlschichtapparates zwischen der Strahleinströmungswand (3) und der Strahlrückströmungswand (4) um eine Längsachse (7) drehbar angeordnetem Zylinder (5),
**dadurch gekennzeichnet,**
**dass** der Zylinder (5) eine nockenförmige Grundfläche aufweiset, wobei sich die Umfangskontur der nockenförmigen Grundfläche als ein zur Strahlrückströmungswand (4) weisender kreisbogenförmiger Bereich (6), durch dessen Kreismittelpunkt die Längsachse (7) verläuft, und als ein sich über den Kreisbogen erhebender, zum unteren Bereich der Strahleinströmungswand (3) weisender Bereich (8) darstellt, derart, dass durch Drehung des Zylinders (5) um die Längsachse (7) zwischen dem erhabenen Bereich (8) des Zylinders (5) und dem unteren Bereich der Strahleinströmungswand (3) ein in seiner Breite veränderbarer Spalt gebildet wird, während der zur Strahlrückströmungswand (4) weisende kreisbogenförmige Bereich (6) des Zylinders (5) an der Strahlrückströmungswand (4) spaltfrei anliegt.

2. Steuerbare Gasanströmeinrichtung nach Anspruch 1,
**dadurch gekennzeichnet,**
**dass** mindestens einer der Seitenbereiche (II) der Umfangskontur der nockenförmigen Grundfläche abgeflacht ist, so dass durch Drehung des Zylinders (5) mindestens eine Stellung des Zylinders (5) existiert, in der sowohl zwischen dem unteren Bereich der Strahleinströmungswand (3) und dem Zylinder (5) als auch der Strahlrückströmungswand (4) und dem Zylinder (5) ein Spalt vorhanden ist

3. Steuerbare Gasanströmeinrichtung nach Anspruch 1 oder 2,
**dadurch gekennzeichnet,**
**dass** um den der Strahlrückströmungswand (4) zugewandten kreisbogenförmigen Bereich (6) des Zylinders (5) ein oder mehrere Fluidisierungsgasleiteinrichtungen (9) angeordnet sind.

4. Steuerbare Gasanströmeinrichtung nach Anspruch 3,
**dadurch gekennzeichnet,**
**dass** mindestens eine Fluidisierungsgasleiteinrichtung (9) an dem kreisbogenförmigen Bereich (6) des Zylinders (5) in Längsrichtung spaltfrei anliegt

5. Steuerbare Gasanströmeinrichtung nach einem der Ansprüche 1 bis 4,
**dadurch gekennzeichnet,**
**dass** der erhabene Bereich (8) des Zylinders (5) derart in Wirkverbindung mit der Innenwand einer unterhalb des Zylinders (5) angeordneten Rinne steht, dass mindestens in einer Stellung des drehbaren Zylinders (5) der erhabene Bereich (8) des Zylinders (5) mindestens linienförmig eng an der Innenwand der Rinne anliegt und durch Drehung des Zylinders (5) um die Längsachse (7) zwischen dem erhabenen Bereich (8) des Zylinders (5) und der Innenwand der Rinne ein in seiner Breite veränderbarer Spalt gebildet wird.

6. Steuerbare Gasanströmeinrichtung nach Anspruch 5,
**dadurch gekennzeichnet,**
**dass** die Strahleinströmungswand (3) nach unten hin in die unterhalb des Zylinders (5) angeordnete Rinne ausläuft.

7. Steuerbare Gasanströmeinrichtung nach Anspruch 5 oder 6,
**dadurch gekennzeichnet,**
**dass** die in Richtung Strahleinströmungswand (3) liegende Auslaufkante der Rinne oberhalb der Berührungslinie, entlang der der erhabene Bereich (8) des Zylinders (5) linienförmig eng an der Innenwand der Rinne anliegt, in Bezug auf die Längsachse (7) des Zylinders (5) bogenförmig gestaltet ist, derart, dass durch Drehung des Zylinders (5) um die Längsachse (7) zwischen dem erhabenen Bereich (8) des Zylinders (5) und der Auslaufkante der Rinne ein entlang der Längsachse (7) des Zylinders (5) unterschiedlich breiter Spalt gebildet wird.

8. Steuerbare Gasanströmeinrichtung nach einem der Ansprüche 1,2, 3 oder 4,
**dadurch gekennzeichnet,**
**dass** die Höhe des sich über den Kreisbogen erhebenden Bereiches (8) der Kontur der Grundfläche des Zylinders (5) in Richtung der Längsachse (7) des Zylinders (5) unterschiedlich ist.

9. Steuerbare Gasanstromeinrichtung nach Anspruch 8,
**dadurch gekennzeichnet,**
**dass** die Länge des Zylinders (5) größer als die Länge der Fluidisierungskammer (I) des Strahlschichtapparates ist und der Zylinder (5) in Längsrichtung verschiebbar im Strahlschichtapparat angeordnet ist.

## Claims

1. Controlled gas inlet device for jet layer units with at least one jet inflow wall (3) and a jet flow back wall (4) positioned opposite the jet inflow wall (3), comprising at least one cylinder (5) arranged rotatable on a longitudinal axis (7) in the lower region of the fluidizing chamber (1) of the jet layer unit between the jet inflow wall (3) and the jet flow back wall (4),
**characterized by that**
the cylinder (5) is established to have a cam-shaped base area with the circumferential contour of the cam-shaped base area presenting itself to be a circular-arc contour portion (6) with the longitudinal axis (7) passing through the circle center point of the circular-arc contour portion (6) and a contour portion (8) rising above the circular arc, pointing towards the lower region of the jet inflow wall (3), in such a way that, by rotation of the cylinder (5) on the longitudinal axis (7), between the rising portion (8) of the cylinder (5) and the lower region of the jet inflow wall (3), a gap is formed variable in its width while the circular-arc contour portion (6) of the cylinder (5), pointing towards the jet flow back wall (4), adjoins the jet flow back wall (4) forming no gap.

2. Controlled gas inlet device to claim 1,
**characterized by that**
at least one lateral portion (11) of the circumferential contour of the cam-shaped base area is flattened so that when rotating the cylinder (5) there is at least one position of the cylinder (5) where there is a gap between the lower region of the jet inflow wall (3) and the cylinder (5), and between the jet flow back wall (4) and the cylinder (5) as well.

3. Controlled gas inlet device to claim 1 or 2,
**characterized by that**
one or several fluidization gas guiding devices (9) are positioned around the circular-arc contour portion (6), which points towards the jet flow back wall (4), of the cylinder (5).

4. Controlled gas inlet device to claim 3,
**characterized by that**
at least one fluidization gas guiding device (9) in longitudinal direction adjoins the circular-arc contour portion (6) of the cylinder (5) thereby forming no gap.

5. Controlled gas inlet device to one of the claims 1 to 4,
**characterized by that**
the rising portion (8) of the cylinder (5) is in an effective connection to the inner wall of a gutter positioned below the cylinder (5) such that at least in one position of the rotatable cylinder (5) the rising portion (8) of the cylinder (5), at least linearly, tight-fittingly adjoins the inner wall of the gutter and, by rotation of the cylinder (5) on the longitudinal axis (7), a gap variable in its width is formed between the rising portion (8) of the cylinder (5) and the inner wall of the gutter.

6. Controlled gas inlet device to claim 5,
**characterized by that**
the jet inflow wall (3) in downward direction ends into the gutter positioned below the cylinder (5).

7. Controlled gas inlet device to claim 5 or 6,
**characterized by that**
the edge of the gutter outgoing in direction of the jet inflow wall (3), above the contact line along that the rising portion (8) of the cylinder (5) linearly tight-fittingly adjoins the inner wall of the gutter, is designed arc-shaped along the longitudinal axis (7) such that, by rotating the cylinder (5) on the longitudinal axis (7), a gap of a width varying along the longitudinal axis (7) of the cylinder (5) is formed between the rising portion (8) of the cylinder (5) and the outgoing edge of the gutter.

8. Controlled gas inlet device to one of the claims 1, 2, 3 or 4,
**characterized by that**
the height of the portion (8), rising above the circular arc, of the contour of the base area of the cylinder (5) varies in direction of the longitudinal axis (7) of the cylinder (5).

9. Controlled gas inlet device to claim 8,
**characterized by that**
the length of the cylinder (5) is longer than the length of the fluidizing chamber (1) of the jet layer unit and the cylinder (5) in the jet layer unit is arranged slideable in longitudinal direction.

## Revendications

1. Dispositif de soufflage de gaz pouvant être commandé pour des appareils d'application de couche fluidisée dotés d'au moins une paroi d'afflux de gaz (3) et une paroi de reflux de gaz (4) opposée à la paroi d'afflux de gaz (3), qui est composé d'au moins un cylindre (5) disposé dans la partie inférieure de la chambre de fluidisation (1) de l'appareil d'application de couche fluidisée, entre la paroi d'afflux de gaz (3) et la paroi de reflux de gaz (4), de manière à pouvoir tourner autour d'un axe longitudinal (7),
**caractérisé en ce**
**que** le cylindre (5) présente une surface de base en forme de came, le profil de la surface de base en forme de came représentant une zone en forme d'arc de cercle (6) pointant vers la paroi de reflux de gaz (4), zone par le centre de laquelle passe l'axe longitudinal (7), et une zone (8) plus saillante que l'arc de cercle et pointant vers la partie inférieure de la paroi d'afflux de gaz (3), de telle sorte que la rotation du cylindre (5) autour de l'axe longitudinal (7) forme, entre la zone proéminente (8) du cylindre (5) et la partie inférieure de la paroi d'afflux de gaz (3), une fente dont la largeur est variable, tandis que la zone en forme d'arc de cercle (6) du cylindre (5), qui pointe vers la paroi de reflux de gaz (4), est appliquée sans fente contre la paroi de reflux de gaz (4).

2. Dispositif de soufflage de gaz pouvant être commandé selon la revendication 1,
**caractérisé en ce**
**qu'**au moins l'une des zones latérales (11) du profil de la surface de base en forme de came est aplatie, de sorte que la rotation du cylindre (5) génère au moins une position du cylindre (5) dans laquelle on obtient la formation d'une fente à la fois entre la partie inférieure de la paroi d'afflux de gaz (3) et le cylindre (5), et entre la paroi de reflux de gaz (4) et le cylindre (5).

3. Dispositif de soufflage de gaz pouvant être commandé selon la revendication 1 ou 2,
**caractérisé en ce**
**qu'**un ou plusieurs dispositifs de guidage du gaz de fluidisation (9) sont disposés autour de la zone en forme d'arc de cercle (6) du cylindre (5) qui est tournée vers la paroi de reflux de gaz (4).

4. Dispositif de soufflage de gaz pouvant être commandé selon la revendication 3,
**caractérisé en ce**
**qu'**au moins un dispositif de guidage du gaz de fluidisation (9) est appliqué longitudinalement sans fente contre la zone en forme d'arc de cercle (6) du cylindre (5).

5. Dispositif de soufflage de gaz pouvant être commandé selon l'une des revendications 1 à 4,
**caractérisé en ce**
**que** la partie proéminente (8) du cylindre (5) est en liaison active avec la paroi interne d'une goulotte située sous le cylindre (5), de manière à ce que, lorsque le cylindre rotatif (5) se trouve dans une certaine position, la zone proéminente (8) du cylindre (5) est étroitement appliquée, au moins de façon linéaire, contre la paroi interne de la goulotte, et que, lorsque le cylindre (5) tourne autour de l'axe longitudinal (7), il se forme, entre la zone proéminente (8) du cylindre (5) et la paroi interne de la goulotte, une fente dont la largeur est variable.

6. Dispositif de soufflage de gaz pouvant être commandé selon la revendication 5,
**caractérisé en ce**
**que** la paroi d'afflux de gaz (3) se termine en bas dans la goulotte située sous le cylindre (5).

7. Dispositif de soufflage de gaz pouvant être commandé selon la revendication 5 ou 6,
**caractérisé en ce**
**qu'**au-dessus de la ligne de contact le long de laquelle la zone proéminente (8) du cylindre (5) est étroitement appliquée de façon linéaire contre la paroi interne de la goulotte, l'arête d'écoulement de la goulotte située du côté de la paroi d'afflux de gaz (3) est réalisée en arc de cercle par rapport à l'axe longitudinal (7) du cylindre (5), de manière à ce que la rotation du cylindre (5) autour de l'axe longitudinal (7) crée, entre la zone proéminente (8) du cylindre (5) et l'arête d'écoulement de la goulotte, une fente dont la largeur varie le long de l'axe longitudinal (7) du cylindre (5).

8. Dispositif de soufflage de gaz pouvant être commandé selon l'une des revendications 1, 2, 3 ou 4,
**caractérisé en ce**
**que** la hauteur de la zone (8) du profil de la surface de base du cylindre (5) qui est plus saillante que l'arc de cercle varie dans la direction de l'axe longitudinal (7) du cylindre (5).

9. Dispositif de soufflage de gaz pouvant être commandé selon la revendication 8,
**caractérisé en ce**
**que** la longueur du cylindre (5) est supérieure à la longueur de la chambre de fluidisation (1) de l'appareil d'application de couche fluidisée, et en ce que le cylindre (5) est disposé dans l'appareil d'application de couche fluidisée de manière à pouvoir être déplacé longitudinalement.
